# EUROPEAN PATENT APPLICATION

(11) **EP 3 806 462 A1**
(43) Date of publication of application: **14.04.2021**
(21) Application number: 19811859.8
(22) Date of filing: 20.05.2019
(51) Int. Cl.: H04N 19/176

(54) **IMAGE ENCODING AND DECODING METHOD , RELATED DEVICE AND STORAGE MEDIUM**

(30) Priority: 28.05.2018 CN 201810524484
(71) Applicant: Sangfor Technologies Inc., Shenzhen, Guangdong 518055 (CN)
(72) Inventor: LUO, Dean, Shenzhen, Guangdong 518055 (CN); HUANG, Zhongqiang, Shenzhen, Guangdong 518055 (CN)
(74) Representative: Müller Schupfner & Partner Patent- und Rechtsanwaltspartnerschaft mbB
(86) International application number: PCT/CN2019/087559
(87) International publication number: WO 2019/228207

(57) **Abstract**

Provided are an image encoding and decoding method, a related device and a storage medium capable of reducing a bitstream of an image and reducing transmission traffic between a server and a client terminal. The method in an embodiment of the present invention comprises: acquiring a current image to be transmitted, and dividing the current image into multiple macroblocks; determining whether the macroblocks satisfy a first preset condition; if so, performing lightweight encoding of the macroblocks to generate a first bitstream; if not, performing pixel-level encoding of the macroblocks to generate a second bitstream, the second bitstream being larger than the first bitstream.

## Description

The present application claims the priority to Chinese Patent Application No.201810524484.8, titled "IMAGE ENCODING AND DECODING METHOD, RELATED DEVICE AND STORAGE MEDIUM", filed on May 28, 2018, with the China National Intellectual Property Administration, which is incorporated herein by reference in its entirety.

### FIELD

**The** present disclosure relates to the technical field and in particular to a method for encoding an image, a method for decoding an image, related devices and storage media.

### BACKGROUND

Desktop virtualization is a technology that enables in an enterprise level realization of remote dynamic access to a desktop system and unified management of a data center. The desktop virtualization can implement the unified management of data and applications by means of a virtualization technology, where multiple desktops are virtualized from a server and clients are connected to the server via a client device to use a desktop operating system. In the desktop virtualization, personal desktops are deployed in the data center in a centralized manner to achieve unified management and control thereof, which can not only save hardware cost, but also save management cost and operation and maintenance cost, while providing users access-on-demand cloud desktops. A virtual desktop infrastructure requires transmission of a large amount of image data in real time, which has high bandwidth requirements. However, a bandwidth of the wide area network is commonly limited. Therefore, for the virtual desktop infrastructure, it is a critical problem to be solved how to reduce transmission traffic between a server and a client device.

The traffic reduction between a server and a client device mainly depends on compression of virtualized desktop images, that is, the higher a compression ratio of a virtualized desktop image is, the more obvious the traffic reduction is, otherwise, the less obvious the traffic reduction is. Existing virtualized desktop image compression methods mainly include LZ series lossless compression, image lossy compression and video lossy compression. Each of the image compression methods has its own advantages and disadvantages. For example, the LZ series lossless compression does not fully consider two-dimensional characteristics of an image, and therefore the compression ratio of a natural image is low. Though image lossy compression and video lossy compression fully consider the two-dimensional characteristics of an image and has a higher compression ratio of a natural image, the compression ratio is low in a case that a desktop image has a large quantity of text and icons. Therefore, how to deploy a compression policy for a virtualized desktop image to improve the compression ratio of the virtualized desktop image is an important problem in reducing the transmission traffic between a server and a client device.

### SUMMARY

**A** method for encoding an image, a method for decoding an image, related devices and storage media are provided according to embodiments of the present disclosure, to reduce a code stream of an image, thereby reducing transmission traffic between a server and a client device.

According to a first aspect, a method for encoding an image is provided in an embodiment of the present disclosure. The method includes:
obtaining a current image to be transmitted, and dividing the current image into multiple macroblocks;
determining whether the macroblock meets a first preset condition;
performing a lightweight encoding on the macroblock to generate a first code stream, if the macroblock meets the first preset condition; and
performing a pixel-level encoding on the macroblock to generate a second code stream, if the macroblock fails to meet the first preset condition, where the second code stream is greater than the first code stream.

Preferably, data of the first code stream includes type tag information of the lightweight encoding and parameter information of the lightweight encoding, and
data of the second code stream includes pixel data, type tag information of the pixel-level encoding and parameter information of the pixel-level encoding.

Preferably, the method further includes:
performing an entropy encoding on the data of the first code stream, the type tag information of the pixel-level encoding and the parameter information of the pixel-level encoding, to generate a third code stream; and
introducing the pixel data in a form of an independent stream into the third code stream, to generate a fourth code stream.

Preferably, the first preset condition includes:
the macroblock is a duplicate of a macroblock at a corresponding position in a preceding image;
each current row or each current column of the macroblock is a duplicate of a preceding row or a preceding column in the macroblock;
the macroblock is a pure color image;
the macroblock is a duplicate of a macroblock in the current image; or
the macroblock is a duplicate of a macroblock in a previous image.

According to a second aspect, a method for decoding an image is provided in an embodiment of the present disclosure. The method includes:
obtaining a fifth code stream of lightweight encoding and a sixth code stream of pixel-level encoding;
performing a lightweight decoding on the fifth code stream to obtain a first macroblock of lightweight encoding;
performing a pixel-level decoding on the sixth code stream to obtain a second macroblock of pixel-level encoding; and
restoring a current image based on the first macroblock and the second macroblock.

Preferably, data of the fifth code stream includes type tag information of the lightweight encoding and parameter information of the lightweight encoding, and
data of the sixth code stream includes pixel data, type tag information of the pixel-level encoding and parameter information of the pixel-level encoding.

Preferably, before obtaining the fifth code stream of lightweight encoding and the sixth code stream of pixel-level encoding, the method further includes:
obtaining an ultimate code stream, where the ultimate code stream includes the pixel data and a seventh code stream of entropy encoding; and
performing an entropy decoding on the seventh code stream to obtain the fifth code stream and an eighth code stream, where data of the eighth code stream includes the type tag information of the pixel-level encoding and the parameter information of the pixel-level encoding.

According to a third aspect, a device for encoding an image is provided in an embodiment of the present disclosure. The device includes an obtaining and division unit, a determining unit, a first execution unit and a second execution unit.

The obtaining and division unit is configured to obtain a current image to be transmitted, and divide the current image into multiple macroblocks.

The determining unit is configured to determine whether the macroblock meets a first preset condition.

The first execution unit is configured to perform a lightweight encoding on the macroblock to generate a first code stream, if the macroblock meets the first preset condition.

The second execution unit is configured to perform a pixel-level encoding on the macroblock to generate a second code stream, if the macroblock fails to meet the first preset condition, where the second code stream is greater than the first code stream.

Preferably, data of the first code stream includes type tag information of the lightweight encoding and parameter information of the lightweight encoding, and
data of the second code stream includes pixel data, type tag information of the pixel-level encoding and parameter information of the pixel-level encoding.

Preferably, the device further includes an entropy encoding unit and an introduction unit.

**The** entropy encoding unit is configured to perform an entropy encoding on the data of the first code stream, the type tag information of the pixel-level encoding and the parameter information of the pixel-level encoding, to generate a third code stream.

The introduction unit is configured to introduce the pixel data in a form of an independent stream into the third code stream to generate a fourth code stream.

According to a fourth aspect, a device for decoding an image is provided in an embodiment of the present disclosure. The device includes a first obtaining unit, a lightweight decoding unit, a pixel-level decoding unit and a restoring unit.

The first obtaining unit is configured to obtain a fifth code stream of lightweight encoding and a sixth code stream of pixel-level encoding.

The lightweight decoding unit is configured to perform a lightweight decoding on the fifth code stream to obtain a first macroblock of lightweight encoding.

The pixel-level decoding unit is configured to perform a pixel-level decoding on the sixth code stream to obtain a second macroblock of pixel-level encoding.

The restoring unit is configured to restore a current image based on the first macroblock and the second macroblock.

Preferably, data of the fifth code stream includes type tag information of the lightweight encoding and parameter information of the lightweight encoding, and
data of the sixth code stream includes pixel data, type tag information of the pixel-level encoding and parameter information of the pixel-level encoding.

Preferably, the device further includes a second obtaining unit and an entropy decoding unit.

The second obtaining unit is configured to obtain an ultimate code stream, where the ultimate code stream includes the pixel data and a seventh code stream of entropy encoding.

The entropy decoding unit is configured to perform an entropy decoding on the seventh code stream to obtain the fifth code stream and an eighth code stream, where data of the eighth code stream includes the type tag information of the pixel-level encoding and the parameter information of the pixel-level encoding.

A computer device is further provided in an embodiment of the present disclosure, which includes a processor. The processor is configured to perform the methods for encoding an image according to the first aspect of the embodiments of the present disclosure when executing a computer program stored in a memory.

A computer device is further provided in an embodiment of the present disclosure, which includes a processor. The processor is configured to perform the methods for decoding an image according to the second aspect of the embodiments of the present disclosure when executing a computer program stored in a memory.

A readable storage medium is further provided in an embodiment of the present disclosure. The readable storage medium stores a computer program, where the computer program, when executed by a processor, causes the processor to perform the methods for encoding an image according to the first aspect of the embodiments of the present disclosure.

A readable storage medium is further provided in an embodiment of the present disclosure. The readable storage medium stores a computer program, where the computer program, when executed by a processor, causes the processor to perform the methods for decoding an image according to the second aspect of the embodiments of the present disclosure.

It can be seen that from the above technology solutions, the embodiments of the present disclosure have the following advantages.

In the embodiments of the present disclosure, the current image to be transmitted is obtained and divided into multiple macroblocks; it is determined whether the macroblock meets the first preset condition; if the macroblock meets the first preset condition, the lightweight encoding is performed on the macroblock; if the macroblock does not meet the first preset condition, the pixel-level encoding is performed on the macroblock. In the present disclosure, different compression encoding methods are performed on different macroblocks in an image based on different compression algorithm frameworks. In addition, the lightweight encoding resulting in a smaller code stream is performed preferably, and if the lightweight encoding is not suitable for the macroblock, the pixel-level encoding is performed on the macroblock, thereby reducing the code stream of the image and the transmission traffic between the server and the client device.

### BRIEF DESCRIPTION OF THE DRAWINGS

Figure 1 is a schematic diagram of a method for encoding an image according to an embodiment of the present disclosure;
Figure 2 is a schematic diagram of a method for encoding an image according to an embodiment of the present disclosure;
Figure 3 is a schematic diagram of a method for decoding an image according to an embodiment of the present disclosure;
Figure 4 is a schematic diagram of a method for decoding an image according to an embodiment of the present disclosure;
Figure 5 is a schematic diagram of a device for encoding an image according to an embodiment of the present disclosure; and
Figure 6 is a schematic diagram of a device for decoding an image according to an embodiment of the present disclosure.

### DETAILED DESCRIPTION

A method for encoding an image, a method for decoding an image, related devices and storage media are provided according to embodiments of the present disclosure, to improve an image compression ratio, thereby reducing transmission traffic between a server and a client device.

The image in the embodiments of the present disclosure is based on desktop virtualization technology. The desktop virtualization refers to virtualization of a computer terminal system (also known as a desktop) to achieve security and flexibility of desktop use. Users can access the desktop system via any devices, at any places, at any time over network.

The desktop virtualization depends on server virtualization, where server virtualization is performed on servers in a data center to generate a large number of independent desktop operating systems, which are sent to terminal devices based on a dedicated virtual desktop protocol. A user terminal logs on to a virtual host over Ethernet, and can access the desktop operating system over the network anytime and anywhere as long as it remembers the user name, password and gateway information thereof, thereby achieving a single computer with multiple users.

However, a virtual desktop infrastructure requires transmission of a large amount of image data in real time, which has high bandwidth requirements. In a condition of a limited bandwidth, an image transmission rate is limited. If the image is transmitted without any further processing, it not only makes image data transmission not smooth, impacting user experience, but also causes a client device to consume massive traffic. Therefore, for the virtual desktop infrastructure, it is a critical problem to be solved how to reduce transmission traffic between a server and a client device.

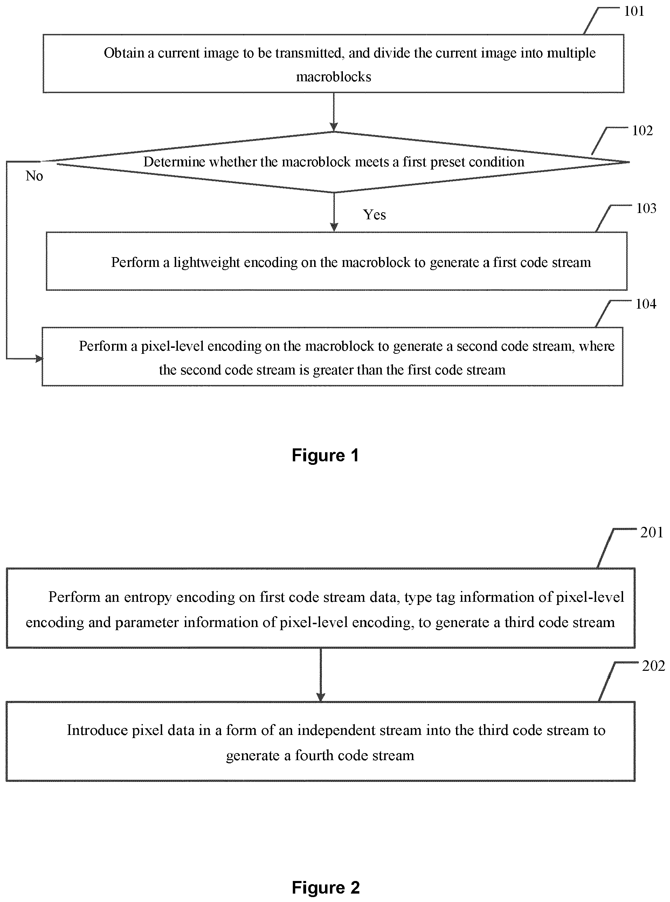

For convenience of understanding, a method for encoding an image in the embodiments of the present disclosure is described as follows. Reference is made to Figure 1, which shows a method for encoding an image according to an embodiment of the present disclosure. The method includes steps 101 to 104.

In step 101, a current image to be transmitted is obtained, and is divided into multiple macroblocks.

In the embodiment, a user logs in a virtual machine via a computer or a mobile terminal to access a virtual desktop, that is, a server sends, based on virtualization on the server, a virtual desktop operating system corresponding to a user to the user based on a dedicated virtual desktop protocol. A method for reducing traffic between the server and a client device is to compress the current image to be transmitted.

Before compressing the current image, the current image to be transmitted needs to be obtained. A compression unit of a desktop image may be reduced to improve a compression ratio of the image. That is, the current image is divided into multiple macroblocks, in which a size of the macroblock is 16*16 pixels or 64*64 pixels. The size of the macroblock may be determined according to compression requirements, and is not limited herein.

In step 102, it is determined whether the macroblock meets a first preset condition. If the macroblock meets the first preset condition, step 103 is performed. If the macroblock does not meet the first preset condition, step 104 is performed.

In the embodiment, different compression methods are performed on macroblocks to improve the compression ratio of the image, that is, it is determined whether the macroblock meets the first preset condition. If the macroblock meets the first preset condition, a lightweight encoding is performed on the macroblock to generate a first code stream, that is, step 103 is performed. If the macroblock does not meet the first preset condition, a pixel-level encoding is performed on the macroblock to generate a second code stream, where the second code stream is greater than the first code stream, that is, step 104 is performed.

The first preset condition includes: (1) the macroblock is a duplicate of a macroblock at a corresponding position in a preceding image, that is, in terms of images, the macroblock is the same as a macroblock at a corresponding position in a preceding image frame; (2) each current row or each current column of the macroblock is a duplicate of a preceding row or a preceding column in the macroblock; (3) the macroblock is a pure color image; (4) the macroblock is a duplicate of a macroblock in the current image; or (5) the macroblock is a duplicate of a macroblock in a previous image.

It should be noted that macroblock division is performed in units of pixels. Therefore, The case that each current row or each current column of the macroblock is a duplicate of a preceding row or a preceding column in the macroblock includes the case that the first row or the first column of the current macroblock is a duplicate of the last row or the last column of a preceding macroblock. In this case, it is highly possible that the macroblock is, in terms of image presentation, a horizontal grid or a vertical grid.

In the embodiment, after an image is divided into multiple macroblocks, a lightweight encoding is performed on a macroblock that meets the first preset condition, and a pixel-level encoding is performed on a macroblock that do not meet the first preset condition. For the lightweight encoding, pixels in the macroblock are not required to be encoded, and it is only required to record at least one of type information of the lightweight encoding and parameter information of the lightweight encoding. Hence, a code stream generated by the lightweight encoding is smaller than a code stream generated by the pixel-level encoding, so that the traffic between a server and a client device can be reduced to some extent.

Preferably, in determining whether the macroblock meets the first preset condition, the determination may be performed according to the conditions in the order of (3)(2)(1)(4)(5), because it is only required to record location information and image color of the current macroblock if the macroblock meets the condition (3), it is required to record location information and possible grid patterns of the current macroblock if the macroblock meets the condition (2), it is required to record location information of the current macroblock and image information of a macroblock at a corresponding position in a preceding frame if the macroblock meets the condition (1), it is required to record location information of the current macroblock and a storage position and image information of a duplicate macroblock in a current image frame if the macroblock meets the condition (4), and it is required to record location information of the current macroblock and location information and specific image information of a duplicate macroblock in the previous image if the macroblock meets the condition (5). Therefore, by this order, data processing speed can be improved.

In step 103, a lightweight encoding is performed on the macroblock to generate a first code stream.

**An** image encoding device performs the lightweight encoding on the macroblock meeting the first preset condition to generate the first code stream. In the lightweight encoding, pixels in the macroblocks are not required to be encoded, and it is only required to simply tag the macroblock, so that the pixels in the macroblock can be restored with the tag information in a decoding process.

Detailed description is made with reference to the first preset condition in step 102. In case of condition (1), the macroblock is a duplicate of a macroblock at a corresponding position in a preceding desktop image frame, that is, the macroblock in the current image is the same as the macroblock at the corresponding position in the preceding image frame. In this case, it is only required to record a type of the lightweight encoding in the process of lightweight encoding, that is, which of the first preset condition the macroblock meets. In a subsequent decoding process, the macroblock can be restored according to the macroblock at the corresponding position in the preceding image frame. In case of condition (2), each current row or each current column of the macroblock is a duplicate of a preceding row or a preceding column in the macroblock. That is, in terms of images, the current macroblock is a horizontal grid or a vertical grid. In this case, it is only required to record a type of the lightweight encoding in the process of lightweight encoding, that is, which of the first preset condition the macroblock meets. In the subsequent decoding process, the macroblock can be restored based on pixels in the preceding row or column. In case of condition (3), the macroblock is a pure color image. In this case, it is required to record a type of the lightweight encoding and parameter information of the lightweight encoding. The parameter information at least includes color information of the macroblock, and the type of the lightweight encoding refers to which of the first preset condition the macroblock meets. In the subsequent decoding process, the macroblock can be restored based on the color information of the macroblock. In case of condition (4), the macroblock is a duplicate of a macroblock in the current image. In this case, it is required to record a type of the lightweight encoding and parameter information of the lightweight encoding in the process of lightweight encoding. The parameter information at least includes a location coordinate of a macroblock which is the same (duplicate) as the macroblock, and the type of the lightweight encoding refers to which of the first preset condition the macroblock meets. In this way, in the subsequent decoding process, the duplicate macroblock can be found according to the location coordinate of the macroblock which is the same (duplicate) as the macroblock, so as to restore the macroblock. In case of condition (5), the macroblock is a duplicate of a macroblock in a previous image. In this case, it is required to record a type of the lightweight encoding and parameter information of the lightweight encoding in the process of lightweight encoding. The parameter information at least includes a location coordinate of a macroblock in the previous image which is the same (duplicate) as the macroblock, and the type of the lightweight encoding refers to which of the first preset condition the macroblock meets. In this way, in the subsequent decoding process, the duplicate macroblock can be found according to the location coordinate of the macroblock in the previous image which is the same (duplicate) as the macroblock, so as to restore the macroblock.

It can be seen that data of the first code stream in the first code stream includes at least one of type tag information of the lightweight encoding and parameter information of the lightweight encoding. The type tag information of the lightweight encoding is used to identify which of the first preset condition the lightweight encoding on the macroblock belongs to. The parameter information of the lightweight encoding is recorded to restore pixels in the macroblock in a subsequent decompression process.

In step 104, a pixel-level encoding is performed on the macroblock to generate a second code stream. The second code stream is greater than the first code stream.

The image encoding device performs the pixel-level encoding on the macroblock that does not meet the first preset condition to generate the second code stream. In the pixel-level encoding, each pixel in the macroblocks is required to be encoded. Since each pixel in each of the macroblocks is required to be encoded, the second code stream generated by the pixel-level encoding is greater than the first code stream generated by the lightweight encoding.

Specifically, a policy of the pixel-level encoding may be comprehensively determined based on a reduction ratio required by an actual bandwidth and performance requirements of pixels. Generally, the policy of the pixel-level encoding includes directly copying all pixels, copying all pixels after quantization, combining with a color prediction algorithm, entropy encoding for pixels and various lossy compression algorithms for video, and the like. The policy of the pixel-level encoding is not specifically limited herein.

It is understandable that data of the second code stream in the second code stream generated by performing the pixel-level encoding on the macroblock at least includes pixel data, type tag information of the pixel-level encoding and parameter information of the pixel-level encoding. The type tag information of the pixel-level encoding is used to identify a specific policy type of the pixel-level encoding performed on the macroblock. The parameter information of the pixel-level encoding is generated in a process of performing the pixel-level encoding on the macroblock. For example, before performing the pixel-level encoding on the macroblock, a feature of the macroblock is extracted first, where the feature may be a color histogram or difference statistic of adjacent pixels of the macroblock. The feature is the parameter information of the pixel-level encoding, and the pixel data is generated by encoding the pixels in a process of performing the pixel-level encoding.

It should be noted that in the process of performing the pixel-level encoding on an image, an appropriate pixel-level encoding method (a lossy encoding or a lossless encoding) may be selected by users based on hardware configuration and requirements of image quality, to meet requirements of the users.

In the embodiment of the disclosure, the current image to be transmitted is obtained, and is divided into multiple macroblocks; it is determined whether the macroblock meets the first preset condition; if the macroblock meets the first preset condition, the lightweight encoding is performed on the macroblock; if the macroblock does not meet the first preset condition, the pixel-level encoding is performed on the macroblock. In the present disclosure, different encoding methods are performed on different macroblocks in an image based on different compression algorithm frameworks. In addition, the lightweight encoding resulting in a smaller code stream is performed preferably, and if the lightweight encoding is not suitable for the macroblock, the pixel-level encoding is performed on the macroblock, thereby reducing the size of the code stream of the image and the transmission traffic between the server and the client device.

In order to further reduce the traffic between the server and the client device, the data of the first code stream and the data of the second code stream generated by encoding the macroblock may be further encoded. Reference is made to Figure 2, which shows a method for encoding an image according to an embodiment of the present disclosure. The method includes steps 201 and 202.

In step 201, an entropy encoding is performed on the data of the first code stream, the type tag information of the pixel-level encoding and the parameter information of the pixel-level encoding, to generate a third code stream.

In order to further improve the reduction ratio of the traffic between the server and the client device, the entropy encoding may be further performed on the data of the first code stream and the type tag information of the pixel-level encoding and the parameter information of the pixel-level encoding in the data of the second code stream, so as to improve the reduction ratio of the traffic.

Specifically, the data of the first code stream includes type tag information of the lightweight encoding and parameter information of the lightweight encoding. The data of the first code stream and the type tag information of the pixel-level encoding and the parameter information of the pixel-level encoding in the data of the second code stream are all text information, which therefore can be further encoded by an entropy encoding policy, such as an adaptive binary arithmetic coding (CABAC) policy, to generate the third code stream, so as to further reduce the traffic between the server and the client device.

In step 202, the pixel data is introduced in a form of an independent stream into the third code stream, to generate a fourth code stream.

In the embodiment as shown in Figure 1, after the pixel-level encoding is performed on the macroblock to generate the second code stream, the data of the second code stream therein includes the pixel data, the type tag information of the pixel-level encoding and the parameter information of the pixel-level encoding. Since a pixel-level encoding policy generally includes entropy encoding, the pixel data is entropy-encoded data. In view of this, the pixel data is introduced in a form of an independent stream into the third code stream to generate the fourth code stream.

After the fourth code stream is transmitted to the client device, the client device caches the fourth code stream and restores a transmitted image based on a corresponding decoding policy.

In the embodiment, after obtaining the first code stream and the second code stream, the image encoding device further performs the entropy encoding policy on the data of the first code stream and the type tag information of the pixel-level encoding and the parameter information of the pixel-level encoding in the data of the second code stream, further improving the compression ratio of the macroblock and reducing the network traffic between the server and the client device.

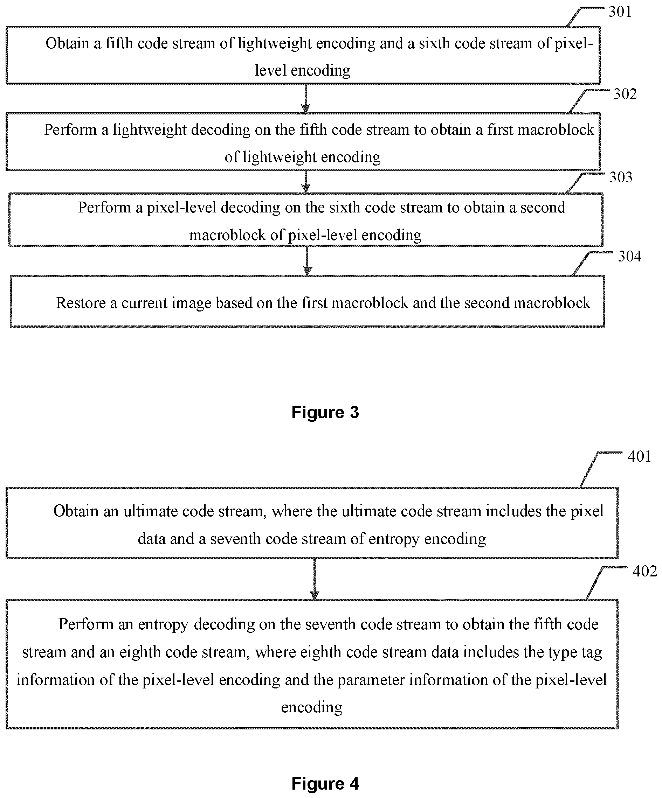

The method for encoding an image in the embodiments of the present disclosure is described above. The method for decoding an image in the embodiments of the present disclosure is described as follows. Reference is made to Figure 3, which shows a method for decoding an image according to an embodiment of the present disclosure. The method includes steps 301 to 304.

In step 301, a fifth code stream of lightweight encoding and a sixth code stream of pixel-level encoding are obtained.

Corresponding to the embodiment as described in Figure 1, in a case that code streams generated by encoding macroblocks are transmitted to a client device, an image decoding device obtains corresponding to-be-decoded code streams. The code streams generated in the process of encoding the macroblocks include a code stream generated by a lightweight encoding and a code stream generated by a pixel-level encoding, and accordingly the code streams obtained by the image decoding device includes a fifth code stream of lightweight encoding and a sixth code stream of pixel-level encoding.

**As** to the embodiment as described in Figure 1, the fifth code stream corresponds to the first code stream, and the sixth code stream corresponds to the second code stream. Accordingly, data of the fifth code stream includes the type tag information of the lightweight encoding and the parameter information of the lightweight encoding, and data of the sixth code stream includes the pixel data, the type tag information of the pixel-level encoding and the parameter information of the pixel-level encoding.

In step 302, a lightweight decoding is performed on the fifth code stream to obtain a first macroblock of lightweight encoding.

After obtaining the fifth code stream, the image decoding device obtains the data of the fifth code stream, and then restores the first macroblock of lightweight encoding based on the data of the fifth code stream. Specifically, the data of the fifth code stream includes at least one of the type tag information of the lightweight encoding and the parameter information of the lightweight encoding.

Specifically, for encoding type (1) where the macroblock is a duplicate of a macroblock at a corresponding position in a preceding desktop image frame, that is, the macroblock in the current image is the same as the macroblock at the corresponding position in the preceding image frame, the image decoding device can restore the macroblock according to the macroblock at the corresponding position in the preceding image frame in a subsequent decoding process; for encoding type (2) where each current row or each current column of the macroblock is a duplicate of a preceding row or a preceding column in the macroblock, that is, in terms of images, the current macroblock is a horizontal grid or a vertical grid, the macroblock can be restored based on pixels in the preceding row or column in the subsequent decoding process; for encoding type (3) where the macroblock is a pure color image, the macroblock can be restored based on the parameter information (color information of the macroblock) of the lightweight encoding in the subsequent decoding process; for encoding type (4) where the macroblock is a duplicate of a macroblock in the current image, the duplicate macroblock can be found according to the parameter information (the location coordinate of the macroblock which is the same (duplicate) as the macroblock) of the lightweight encoding in the subsequent decoding process, so as to restore the macroblock; for encoding type (5) where the macroblock is a duplicate of a macroblock in a previous image, the duplicate macroblock can be found according to the parameter information (the location coordinate of the macroblock in the previous image which is the same (duplicate) as the macroblock) of the lightweight encoding in the subsequent decoding process, so as to restore the macroblock.

In step 303, a pixel-level decoding is performed on the sixth code stream to obtain a second macroblock of pixel-level encoding.

After obtaining the sixth code stream, the image decoding device obtains the data of the sixth code stream. The data of the sixth code stream includes the pixel data, the type tag information of the pixel-level encoding and the parameter information of the pixel-level encoding.

It should be noted that in the process of encoding, a specific policy of the pixel-level encoding is comprehensively determined based on a traffic reduction ratio required by an actual bandwidth and performance requirements for an image. Therefore, in the process of decoding, the data of the sixth code stream is decoded by using a corresponding decoding policy based on the pixel data, type information of the pixel-level encoding and the parameter information of the pixel-level encoding, to obtain the second macroblock of pixel-level encoding.

In step 304, a current image is restored based on the first macroblock and the second macroblock.

After obtaining the first macroblock and the second macroblock, the image decoding device can restore the current image based on sequence information of the first macroblock and the second macroblock, as macroblock divisions at a decoding terminal and an encoding terminal are the same.

In the embodiment of the present disclosure, after obtaining the fifth code stream of lightweight encoding and the sixth code stream of pixel-level encoding, the image decoding device performs the lightweight decoding on the fifth code stream to obtain the first macroblock of lightweight encoding, performs the pixel-level decoding on the sixth code stream to obtain the second macroblock of pixel-level encoding, and then restores the current image based on the first macroblock and the second macroblock.

Based on the embodiment described in Figure 3, before the image decoding device obtains the fifth code stream of lightweight encoding and the sixth code stream of pixel-level encoding, it is required to perform an entropy decoding on an obtained code stream. Reference is made to Figure 4, which shows a method for decoding an image according to an embodiment of the present disclosure. The method includes steps 401 to 402.

In step 401, an ultimate code stream is obtained, where the ultimate code stream includes the pixel data and a seventh code stream of entropy encoding.

Corresponding to the embodiment described in Figure 2, in order to further reduce the code stream, a virtual image encoding device performs an entropy encoding on the data of the first code stream and the type tag information of the pixel-level encoding and the parameter information of the pixel-level encoding. Therefore, accordingly at the image decoding device, the ultimate code stream obtained by the image decoding device for a first time instance includes the pixel data and the seventh code stream generated by the entropy encoding. Data of the seventh code stream includes the data of the fifth code stream and an eighth code stream. Data of the eighth code stream includes the type tag information of the pixel-level encoding and the parameter information of the pixel-level encoding in the data of the sixth code stream.

In step 402, an entropy encoding is performed on the seventh code stream to obtain the fifth code stream and an eighth code stream. The eighth code stream includes the type tag information of the pixel-level encoding and the parameter information of the pixel-level encoding.

It is easy to understand that corresponding to the embodiment described in Figure 2, the image encoding device performs the entropy encoding on the data of the first code stream, the type tag information of the pixel-level encoding and the parameter information of the pixel-level encoding. Accordingly, after obtaining the seventh code stream of entropy encoding, the virtual image decoding device performs a corresponding entropy decoding on the seventh code stream to obtain the fifth code stream and the eighth code stream. The fifth code stream includes at least one of the type tag information of the lightweight encoding and the parameter information of the lightweight encoding. The eighth code stream includes the type tag information of the pixel-level encoding and the parameter information of the pixel-level encoding. That is, the fifth code stream corresponds to the first code stream in the embodiment shown in Figure 2. The pixel data and the eighth code stream form the sixth code stream, corresponding to the second code stream in the embodiment shown in Figure 2.

Corresponding to the embodiment shown in Figure 2, before obtaining the fifth code stream of lightweight encoding and the sixth code stream of pixel-level encoding, the image decoding device needs to perform an entropy decoding on the seventh code stream in the obtained ultimate code stream, to obtain corresponding fifth code stream and sixth code stream.

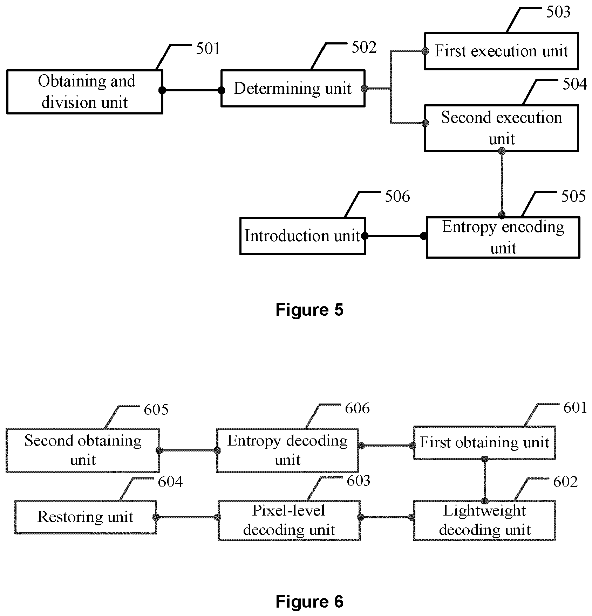

The methods respectively for encoding and decoding an image are described above, and devices respectively for encoding and decoding an image in the embodiments of the present disclosure are described hereinafter with reference to Figures 5 and 6. The device for encoding an image in an embodiment of the present disclosure includes an obtaining and division unit 501, a determining unit 502, a first execution unit 503 and a second execution unit 504.

**The** obtaining and division unit 501 is configured to obtain a current image to be transmitted, and divide the current image into multiple macroblocks.

**The** determining unit 502 is configured to determine whether the macroblock meets a first preset condition.

**The** first execution unit 503 is configured to perform a lightweight encoding on the macroblock to generate a first code stream, if the macroblock meets the first preset condition.

The second execution unit 504 is configured to perform a pixel-level encoding on the macroblock to generate a second code stream, if the macroblock fails to meet the first preset condition, where the second code stream is greater than the first code stream.

Preferably, data of the first code stream includes type tag information of the lightweight encoding and parameter information of the lightweight encoding, and

data of the second code stream includes pixel data, type tag information of the pixel-level encoding and parameter information of the pixel-level encoding.

Preferably, the device further includes an entropy encoding unit 505 and an introduction unit 506.

The entropy encoding unit 505 is configured to perform an entropy encoding on the data of the first code stream, the type tag information of the pixel-level encoding and the parameter information of the pixel-level encoding, to generate a third code stream.

The introduction unit 506 is configured to introduce the pixel data in a form of an independent stream into the third code stream to generate a fourth code stream.

Preferably, the first preset condition includes:
the macroblock is a duplicate of a macroblock at a corresponding position in a preceding image;
each current row or each current column of the macroblock is a duplicate of a preceding row or a preceding column in the macroblock;
the macroblock is a pure color image;
the macroblock is a duplicate of a macroblock in the current image; or
the macroblock is a duplicate of a macroblock in a previous image.

In the embodiment of the present disclosure, the obtaining and division unit 501 obtains the current image to be transmitted and divides the current image into multiple macroblocks; the determining unit 502 determines whether the macroblock meets the first preset condition; if the macroblock meets the first preset condition, the first execution unit 503 performs the lightweight encoding on the macroblock; if the macroblock does not meet the first preset condition, the second execution unit 504 performs the pixel-level encoding on the macroblock. In the present disclosure, different encoding methods are performed on different macroblocks in an image based on different compression algorithm frameworks. In addition, the lightweight encoding resulting in a smaller code stream is performed preferably, and if the lightweight encoding is not suitable for the macroblock, the pixel-level encoding is performed on the macroblock, thereby reducing the size of the code stream of the image and the transmission traffic between the server and the client device.

After generating the first code stream and the second code stream, the entropy encoding unit 505 further performs an entropy encoding policy on the data of the first code stream and the type tag information of the pixel-level encoding and the parameter information of the pixel-level encoding in the data of the second code stream, further improving a compression ratio of the macroblock and reducing traffic between the server and the client device.

The device for decoding an image in an embodiment of the present disclosure is describes as follows. With reference to Figure 6, the device for decoding an image according to an embodiment of the present disclosure includes a first obtaining unit 601, a lightweight decoding unit 602, a pixel-level decoding unit 603 and a restoring unit 604.

The first obtaining unit 601 is configured to obtain a fifth code stream of lightweight encoding and a sixth code stream of pixel-level encoding.

The lightweight decoding unit 602 is configured to perform a lightweight decoding on the fifth code stream to obtain a first macroblock of lightweight encoding.

The pixel-level decoding unit 603 is configured to perform a pixel-level decoding on the sixth code stream to obtain a second macroblock of pixel-level encoding.

The restoring unit 604 is configured to restore a current image based on the first macroblock and the second macroblock.

Preferably, data of the fifth code stream includes type tag information of the lightweight encoding and parameter information of the lightweight encoding, and
data of the sixth code stream includes pixel data, type tag information of the pixel-level encoding and parameter information of the pixel-level encoding.

Preferably, the device further includes a second obtaining unit 605 and an entropy decoding unit 606.

The second obtaining unit 605 is configured to obtain an ultimate code stream, where the ultimate code stream includes the pixel data and a seventh code stream of entropy encoding.

The entropy decoding unit 606 is configured to perform an entropy decoding on the seventh code stream to obtain the fifth code stream and an eighth code stream, where data of the eighth code stream includes the type tag information of the pixel-level encoding and the parameter information of the pixel-level encoding.

In the embodiment of the present disclosure, after the second obtaining unit 605 obtains the ultimate code stream, the entropy decoding is performed on the ultimate code stream by the entropy decoding unit 606, to obtain the fifth code stream and the eighth code stream; the lightweight decoding is performed on the fifth code stream by the lightweight decoding unit 602 to obtain the first macroblock of lightweight encoding; the pixel-level decoding is performed on the sixth code stream by the pixel-level decoding unit 603 to obtain the second macroblock of pixel-level encoding; further, the current image is restored based on the first macroblock and the second macroblock.

The device for encoding an image and the device for decoding an image in the embodiments of the present disclosure are described in terms of modular functional entities. A computer device in an embodiment of the present disclosure is described in terms of hardware processing hereinafter.

The computer device is configured to implement the function of the device for encoding an image. In an embodiment of the present disclosure, the computer device includes a processor and a memory.

The memory is configured to store a computer program, and the processor is configured to perform the following steps by executing the computer program stored in the memory:
obtaining a current image to be transmitted, and dividing the current image into multiple macroblocks;
determining whether the macroblock meets a first preset condition;
performing a lightweight encoding on the macroblock to generate a first code stream, if the macroblock meets the first preset condition; and
performing a pixel-level encoding on the macroblock to generate a second code stream, if the macroblock fails to meet the first preset condition, where the second code stream is greater than the first code stream.

Preferably, data of the first code stream includes type tag information of the lightweight encoding and parameter information of the lightweight encoding, and
data of the second code stream includes pixel data, type tag information of the pixel-level encoding and parameter information of the pixel-level encoding.

In some embodiments of the present disclosure, the processor is further configured to perform the following steps:
performing an entropy encoding on the data of the first code stream, the type tag information of the pixel-level encoding and the parameter information of the pixel-level encoding, to generate a third code stream; and
introducing the pixel data in a form of an independent stream into the third code stream, to generate a fourth code stream.

Preferably, the first preset condition includes:
the macroblock is a duplicate of a macroblock at a corresponding position in a preceding image;
each current row or each current column of the macroblock is a duplicate of a preceding row or a preceding column in the macroblock;
the macroblock is a pure color image;
the macroblock is a duplicate of a macroblock in the current image; or
the macroblock is a duplicate of a macroblock in a previous image.

The computer device is further configured to implement the function of the device for decoding an image. In an embodiment of the present disclosure, the computer device includes a processor and a memory.

The memory is configured to store a computer program, and the processor is configured to perform the following steps by executing the computer program stored in the memory:
obtaining a fifth code stream of lightweight encoding and a sixth code stream of pixel-level encoding;
performing a lightweight decoding on the fifth code stream to obtain a first macroblock of lightweight encoding;
performing a pixel-level decoding on the sixth code stream to obtain a second macroblock of pixel-level encoding; and
restoring a current image based on the first macroblock and the second macroblock.

Preferably, data of the fifth code stream includes type tag information of the lightweight encoding and parameter information of the lightweight encoding, and
data of the sixth code stream includes pixel data, type tag information of the pixel-level encoding and parameter information of the pixel-level encoding.

In some embodiments of the present disclosure, the processor is further configured to perform the following steps:
obtaining an ultimate code stream, where the ultimate code stream includes the pixel data and a seventh code stream of entropy encoding; and
performing an entropy decoding on the seventh code stream to obtain the fifth code stream and an eighth code stream, where data of the eighth code stream includes the type tag information of the pixel-level encoding and the parameter information of the pixel-level encoding.

It is understandable that when executing the computer program, the processor in the computer device as described above can implement the functions of the units in the device for encoding an image and the device for decoding an image according to the device embodiments, which is not repeated herein. For example, the computer program may be divided into one or more modules/units, and the one or more modules/units are stored in the memory and executed by the processor to implement the present disclosure. The one or more modules/units may be a series of computer program instruction segments capable of performing specific functions, where the instruction segments are used to describe the execution process of the computer program in the devices for encoding and decoding an image. For example, the computer program may be divided into the units in the device for encoding an image, and each unit can implement the specific functions as described in the corresponding device for encoding an image above.

The computer device may be computing devices such as a desktop computer, a notebook computer, a handheld computer and a cloud server. The computer device may include, but not limited to, a processor and a memory. It can be understood by those skilled in the art that the processor and memory are only examples of the computer device, which are not intended to limit the computer device. The computer device may include more or less components, or some components combination, or different components. For example, the computer device may further include an input/output device, a network access device, a bus, and the like.

The processor may be a central processing unit (Central Processing Unit, CPU), any other general-purpose processor, a digital signal processor (Digital Signal Processor, DSP), an application specific integrated circuit (Application Specific Integrated Circuit, ASIC), a field-programmable gate array (Field-Programmable Gate Array, FPGA), any other programmable logic device, a discrete gate, a transistor logic device, or a discrete hardware component. The general-purpose processor may be a microprocessor or any routine processor. The processor is a control center of the computer device, which is connected with various parts of the computer device by various interfaces and wirings.

The memory is configured to store the computer program and/or module, and the processor can implement various functions of the computer device by running or executing the computer program and/or module stored in the memory and calling the data stored in the memory. The memory mainly includes a program storage area and a data storage area. The program storage area is configured to store an operating system and an application program required by at least one function, and the like. The data storage area is configured to store data created based on the use of terminal, and the like. In addition, the memory may include a high-speed random access memory, and further include a non-volatile memory, such as a hard disk, an internal memory, a plug-in hard disk, a smart media card (Smart Media Card, SMC), a secure digital (Secure Digital, SD) card, a flash card (Flash Card), at least one disk storage device, a flash device or other volatile solid-state storage devices.

A computer-readable storage medium is further provided according to an embodiment of the present disclosure. The computer-readable storage medium is configured to implement the function of the device for encoding an image, and stores a computer program. The computer program, when executed by a processor, causes the processor to perform the following steps:
obtaining a current image to be transmitted, and dividing the current image into multiple macroblocks;
determining whether the macroblock meets a first preset condition;
performing a lightweight encoding on the macroblock to generate a first code stream, if the macroblock meets the first preset condition; and
performing a pixel-level encoding on the macroblock to generate a second code stream, if the macroblock fails to meet the first preset condition, where the second code stream is greater than the first code stream.

Preferably, data of the first code stream includes type tag information of the lightweight encoding and parameter information of the lightweight encoding, and
data of the second code stream includes pixel data, type tag information of the pixel-level encoding and parameter information of the pixel-level encoding.

In some embodiments of the present disclosure, the computer program stored in the computer-readable storage medium, when executed by the processor, causes the processor to perform the following steps:
performing an entropy encoding on the data of the first code stream, the type tag information of the pixel-level encoding and the parameter information of the pixel-level encoding, to generate a third code stream; and
introducing the pixel data in a form of an independent stream into the third code stream, to generate a fourth code stream.

Preferably, the first preset condition includes:
the macroblock is a duplicate of a macroblock at a corresponding position in a preceding image;
each current row or each current column of the macroblock is a duplicate of a preceding row or a preceding column in the macroblock;
the macroblock is a pure color image;
the macroblock is a duplicate of a macroblock in the current image; or
the macroblock is a duplicate of a macroblock in a previous image.

Another computer-readable storage medium is further provided according the present disclosure. The computer-readable storage medium is configured to implement the function of the device for decoding an image, and stores a computer program. The computer program, when executed by a processor, causes the processor to perform the following steps:
obtaining a fifth code stream of lightweight encoding and a sixth code stream of pixel-level encoding;
performing a lightweight decoding on the fifth code stream to obtain a first macroblock of lightweight encoding;
performing a pixel-level decoding on the sixth code stream to obtain a second macroblock of pixel-level encoding; and
restoring a current image based on the first macroblock and the second macroblock.

Preferably, data of the fifth code stream includes type tag information of the lightweight encoding and parameter information of the lightweight encoding, and
data of the sixth code stream includes pixel data, type tag information of the pixel-level encoding and parameter information of the pixel-level encoding.

In some embodiments of the present disclosure, the processor is further configured to perform the following steps:
obtaining an ultimate code stream, where the ultimate code stream includes the pixel data and a seventh code stream of entropy encoding; and
performing an entropy decoding on the seventh code stream to obtain the fifth code stream and an eighth code stream, where data of the eighth code stream includes the type tag information of the pixel-level encoding and the parameter information of the pixel-level encoding.

It should be understood that if the integrated unit is implemented in a form of software functional unit and sold or used as an independent product, it may be stored in a corresponding computer-readable storage medium. Based on the understanding, all or part of the flow of the method according to the embodiments of the present disclosure may be implemented by a computer program instructing relevant hardware. The computer program may be stored in a computer-readable storage medium. The computer program, when executed by a processor, causes the processor to perform the steps of the method according to the above embodiments. The computer program includes computer program code, and the computer program code may be in a form of source code, object code, an executable file or some intermediate forms. The computer-readable medium may include any entity, device, recording medium, U disk, mobile hard disk, magnetic disk, optical disc, computer memory, read-only memory (ROM, Read-Only Memory), random access memory (RAM, Random Access Memory), electric carrier signal, telecommunication signal or software distribution medium capable of carrying the computer program code. It should be noted that content of the computer-readable medium can be appropriately added or reduced according to the requirements of the legislation and patent practice in a judicial district. For example, in some judicial districts, the computer-readable medium does not include an electric carrier signal or a telecommunication signal according to the legislation and patent practice thereof.

Those skilled in the art can clearly understand that for the convenience and conciseness of the description, reference may be made to the corresponding process in the above method embodiments for specific operation processes of the systems, devices and units described above, which is not repeated herein.

In the embodiments according to the present disclosure, it should be understood that the disclosed system, device and method may be implemented in other forms. For example, the device embodiments described above are only exemplary. For example, the division of the units is only a logical function division. There may be other division methods in practical application, for example, multiple units or components may be combined or integrated into another system, or some features may be disregarded or not implemented. In addition, the mutual coupling, direct coupling, communication connection shown or discussed may be indirect coupling or communication connection via some interfaces, devices or units, and may be in an electrical form, a mechanical form or other forms.

The units described as separated components may be or may be not physically separated, and the component displayed as a unit may be or may be not a physical unit, that is, they may be arranged in one place or distributed to multiple network units. Some or all of the units may be selected as needed to achieve the purpose of the embodiments of the present disclosure.

In addition, functional units in the embodiments of the present disclosure may be integrated into a processing unit, or each unit may exist separately, or two or more units may be integrated in one unit. The integrated unit may be implemented in a form of hardware or software functional unit.

If the integrated unit is implemented in the form of software functional unit and sold or used as an independent product, the integrated unit may be stored in a computer-readable storage medium. Based on the understanding, the technical solution of the present disclosure in essence or the part that contributes to the conventional technology or the whole or part of the technical solution may be embodied in the form of software product. The computer software product is stored in a storage medium, and includes a number of instructions to enable a computer device (which may be a personal computer, a server, or a network apparatus) to perform all or some of the steps of the methods in the embodiments of the present disclosure. The foregoing storage medium described above includes a medium that can store program code, such as a U disk, a mobile hard disk, a read-only memory (ROM, Read-Only Memory), a random access memory (RAM, Random Access Memory), a magnetic disk or an optical disc.

Heretofore, the above embodiments are merely provided for describing the technical solutions of the present disclosure, rather than limiting the present disclosure. Although the present disclosure is described in detail with reference to the foregoing embodiments, those skilled in the art should understand that they can still modify technical solutions described in the foregoing embodiments or make equivalent substitutions to some of the technical features, and that such modifications or substitutions deviate the essence of the corresponding technical solutions from the spirit and scope of the embodiments of the present disclosure.

## Claims

1. A method for encoding an image, the method comprising:
obtaining a current image to be transmitted, and dividing the current image into a plurality of macroblocks;
determining whether the macroblock meets a first preset condition;
performing a lightweight encoding on the macroblock to generate a first code stream, in a case that the macroblock meets the first preset condition; and
performing a pixel-level encoding on the macroblock to generate a second code stream, in a case that the macroblock fails to meet the first preset condition, wherein the second code stream is greater than the first code stream.

2. The method according to claim 1, wherein data of the first code stream comprises type tag information of the lightweight encoding and parameter information of the lightweight encoding, and
data of the second code stream comprises pixel data, type tag information of the pixel-level encoding and parameter information of the pixel-level encoding.

3. The method according to claim 2, further comprising:
performing an entropy encoding on the data of the first code stream, the type tag information of the pixel-level encoding and the parameter information of the pixel-level encoding, to generate a third code stream; and
introducing the pixel data in a form of an independent stream into the third code stream, to generate a fourth code stream.

4. The method according to any one of claims 1 to 3, wherein the first preset condition comprises:
the macroblock is a duplicate of a macroblock at a corresponding position in a preceding image;
each current row or each current column of the macroblock is a duplicate of a preceding row or a preceding column in the macroblock;
the macroblock is a pure color image;
the macroblock is a duplicate of a macroblock in the current image; or
the macroblock is a duplicate of a macroblock in a previous image.

5. A method for decoding an image, the method comprising:
obtaining a fifth code stream of lightweight encoding and a sixth code stream of pixel-level encoding;
performing a lightweight decoding on the fifth code stream to obtain a first macroblock of lightweight encoding;
performing a pixel-level decoding on the sixth code stream to obtain a second macroblock of pixel-level encoding; and
restoring a current image based on the first macroblock and the second macroblock.

6. The method according to claim 5, wherein data of the fifth code stream comprises type tag information of the lightweight encoding and parameter information of the lightweight encoding, and
data of the sixth code stream comprises pixel data, type tag information of the pixel-level encoding and parameter information of the pixel-level encoding.

7. The method according to claim 6, wherein before obtaining the fifth code stream of lightweight encoding and the sixth code stream of pixel-level encoding, the method further comprises:
obtaining an ultimate code stream, wherein the ultimate code stream comprises the pixel data and a seventh code stream of entropy encoding; and
performing an entropy decoding on the seventh code stream to obtain the fifth code stream and an eighth code stream, wherein data of the eighth code stream comprises the type tag information of the pixel-level encoding and the parameter information of the pixel-level encoding.

8. A device for encoding an image, the device comprising:
an obtaining and division unit, configured to obtain a current image to be transmitted, and divide the current image into a plurality of macroblocks;
a determining unit, configured to determine whether the macroblock meets a first preset condition;
a first execution unit, configured to perform a lightweight encoding on the macroblock to generate a first code stream, in a case that the macroblock meets the first preset condition; and
a second execution unit, configured to perform a pixel-level encoding on the macroblock to generate a second code stream, in a case that the macroblock fails to meet the first preset condition, wherein the second code stream is greater than the first code stream.

9. The device according to claim 8, wherein data of the first code stream comprises type tag information of the lightweight encoding and parameter information of the lightweight encoding, and
data of the second code stream comprises pixel data, type tag information of the pixel-level encoding and parameter information of the pixel-level encoding.

10. The device according to claim 9, further comprising:
an entropy encoding unit, configured to perform an entropy encoding on the data of the first code stream, the type tag information of the pixel-level encoding and the parameter information of the pixel-level encoding, to generate a third code stream; and
an introduction unit, configured to introduce the pixel data in a form of an independent stream into the third code stream to generate a fourth code stream.

11. A device for decoding an image, the device comprising:
a first obtaining unit, configured to obtain a fifth code stream of lightweight encoding and a sixth code stream of pixel-level encoding;
a lightweight decoding unit, configured to perform a lightweight decoding on the fifth code stream to obtain a first macroblock of lightweight encoding;
a pixel-level decoding unit, configured to perform a pixel-level decoding on the sixth code stream to obtain a second macroblock of pixel-level encoding; and
a restoring unit, configured to restore a current image based on the first macroblock and the second macroblock.

12. The device according to claim 11, wherein data of the fifth code stream comprises type tag information of the lightweight encoding and parameter information of the lightweight encoding, and
data of the sixth code stream comprises pixel data, type tag information of the pixel-level encoding and parameter information of the pixel-level encoding.

13. The device according to claim 12, further comprising:
a second obtaining unit, configured to obtain an ultimate code stream,
wherein the ultimate code stream comprises the pixel data and a seventh code stream of entropy encoding; and
an entropy decoding unit, configured to perform an entropy decoding on the seventh code stream to obtain the fifth code stream and an eighth code stream, wherein data of the eighth code stream comprises the type tag information of the pixel-level encoding and the parameter information of the pixel-level encoding.

14. A computer device comprising a processor, wherein the processor is configured to perform the method for encoding an image according to any one of claims 1 to 4 when executing a computer program stored in a memory.

15. A readable storage medium with a computer program stored thereon, wherein the computer program, when executed by a processor, causes the processor to perform the method for encoding an image according to any one of claims 1 to 4.

16. A computer device comprising a processor, wherein the processor is configured to perform the method for decoding an image according to any one of claims 5 to 7 when executing a computer program stored in a memory.

17. A readable storage medium with a computer program stored thereon, wherein the computer program, when executed by a processor, causes the processor to perform the method for decoding an image according to any one of claims 5 to 7.
